# EUROPEAN PATENT SPECIFICATION

(11) **EP 3 473 942 B1**
(45) Date of publication and mention of the grant of the patent: **08.04.2020**
(21) Application number: 18197276.1
(22) Date of filing: 27.09.2018
(51) Int. Cl.: F24F 5/00, F24F 12/00, F24F 7/08, F24F 13/30, F24F 7/06

(54) **A HEAT EXCHANGER AND ACCUMULATOR DEVICE FOR VENTILATING ROOMS**
EIN WÄRMEAUSTAUSCH- UND WÄRMESPEICHERSGERÄT FÜR DIE BELÜFTUNG VON RÄUMEN
ECHANGEUR DE CHALEUR ET ACCUMULATEUR DE CHALEUR POUR LA VENTILATION DES PIECES

(30) Priority: 20.10.2017 IT 201700118935
(43) Date of publication of application: 24.04.2019
(73) Proprietor: ELICA S.p.A., 60044 Fabriano (AN) (IT)
(72) Inventor: MENICONI, Luca, 06028 Sigillo PG (IT); CHIAVARINI, Francesco, 60044 Genga AN (IT)
(74) Representative: Perani & Partners S.p.A.

(56) References cited:
- EP-A1- 2 894 412
- EP-A2- 2 325 573
- CN-U- 202 338 980
- DE-A1- 19 638 535
- DE-A1-102014 200 538
- KR-B1- 100 727 227
- US-A- 5 050 667

## Description

### Technical field

The present invention relates to a heat exchanger and accumulator device for ventilating environments according to the preamble of claim 1.

Namely, this device is useful to provide adequate air renewal in environments with no windows or where additional ventilation is required. These environments can be of any nature, for example domestic environments, kitchens, restaurants or more.

### Background art

Several types of heat exchanger and accumulator devices are known in the art for ventilating environments.

For example, a building ventilation device is disclosed in patent EP 2325573. This device comprises a housing body with an air passage duct therein. The duct has a first opening configured to provide fluid communication between the duct and a first environment, and a second opening configured to provide fluid communication between the duct and a second environment. The central zone of the duct has two heat accumulators transverse to the duct, with a fan therebetween for moving air.

A further device is disclosed in US Patent No. 5,050,667. This document discloses a device comprising a housing body with a single air duct. The duct has a first opening for fluid communication thereof with a first environment, for example a room. The duct also has a second opening through which it is connected in fluid communication with a second environment, for example an outdoor environment. The device comprises a heat accumulator configured to release and/or receive heat to/from air. This accumulator is located in the duct. A fan is placed within the duct. The fan is able to generate a substantially axial air stream through the duct. The fan may be rotated about a transverse axis to assume two distinct operating positions: a first position in which the air stream is directed from the first opening to the second opening and a second position in which the the direction of the air stream is reversed. The apparatus comprises means for moving the fan from the first position to the second position, e.g. a solenoid.

Another prior art device is the one described in US201519834 by Lunos. This document discloses a device that is similar to the previous one except that it uses two fans located within the duct. The first and the second fans are able to generate respective substantially axial air streams through the duct along paths that are fluidly separate and distinct from each other. The individual streams are conveyed into a single heat exchanger through a portion thereof in fluidly separated, thermally coupled relationship.

### Problem of the prior art

One drawback of the prior art is that the fans of US201519834 as well as those of US 5,050,667 are located substantially at the opening that faces the first environment, i.e. the room. Namely, these fans substantially face a safety grid, whereby bumpy air streams proximate to the fans directly interact with the grid, thereby increasing the noise produced by the device.

This affects the ease and comfort of people in the room.

### Object of the present invention

Therefore, the technical purpose of the present invention is to provide a heat exchanger and accumulator for ventilating environments, that can obviate the above mentioned prior art drawbacks.

In particular, the object of the present invention is to provide a heat exchanger and accumulator device for ventilating rooms that can substantially reduce of the noise produced during operation.

The aforementioned technical purpose and objects are substantially fulfilled by a heat exchanger and accumulator device for ventilating environments that comprises the technical features as disclosed in one or more of the accompanying claims.

### Advantages of the present invention

Particularly, a heat exchanger and accumulator device for ventilating environments according to one embodiment of the present invention comprises a housing body. This housing body extends along a longitudinal axis. This housing body is designed to be fitted into a wall.

The housing body has at least one air passage duct. This duct has a first opening and a second opening. The first opening is configured to provide fluid communication between the duct and a first environment. The second opening is configured to provide fluid communication between the duct and a second environment. The duct has a central zone between the first and second openings.

The device comprises one heat accumulator configured to release and/or receive heat to/from air. This accumulator is located in the duct.

The device comprises of air moving means, which are configured to push air either from first opening to the second opening or from the second opening to the first opening.

According to the invention, the accumulator is placed in an position proximate to one of the openings. The air moving means are placed in the central zone of the duct.

The device solves the technical problem, as the air moving means are placed at the center of the duct. In operation, they will be completely surrounded by the wall in which the device is fitted. This arrangement can benefit both from the acoustic insulation of the wall, and from the fact that the air moving means are as far away as possible from the user. This will reduce the noise of the device of the invention.

### LIST OF DRAWINGS

Further features and advantages of the present invention will result more clearly from the illustrative, non-limiting description of a preferred, non-exclusive embodiment of a heat exchanger and accumulator device for ventilating environments as shown in the annexed drawings, in which:
- Figure 1 is a perspective view of a heat exchanger and accumulator device for ventilating rooms when it fits in the thickness of a partition wall, according to the present invention;
- Figure 2 is a sectional view of the device of Figure 1; and
- Figure 3 is an exploded perspective view of the device of Figures 1 and 2, with certain parts omitted to better show other parts.

### DETAILED DESCRIPTION

The apparatus of the annexed figures shall be deemed to be schematically illustrated, not necessarily drawn to scale, and not necessarily representing the actual proportions of its parts.

Although this is not expressly shown, the individual features described with reference to each embodiment shall be intended as auxiliary and/or interchangeable with other features, as described with reference to other embodiments.

Referring to the annexed figures, numeral 1 generally designates a heat exchanger and accumulator device for ventilating environments of the present invention.

The device 1 comprises a housing body 2. Preferably, the housing body 2 mainly extends along a longitudinal axis "A".

The housing body 2 has a prismatic, more preferably cylindrical, shape. The housing body 15 has a first end 2a and a second end 2b.

In a preferred embodiment of the invention, the housing body 2 has a substantially cylindrical shape whose diameter ranges from 120 to 200 mm, and is preferably 160 mm, and whose length ranges from 400 to 480 mm, and is preferably 440 mm.

There may be countless variant embodiments of the housing body 2, with any diameter and length, particularly as required by each application.

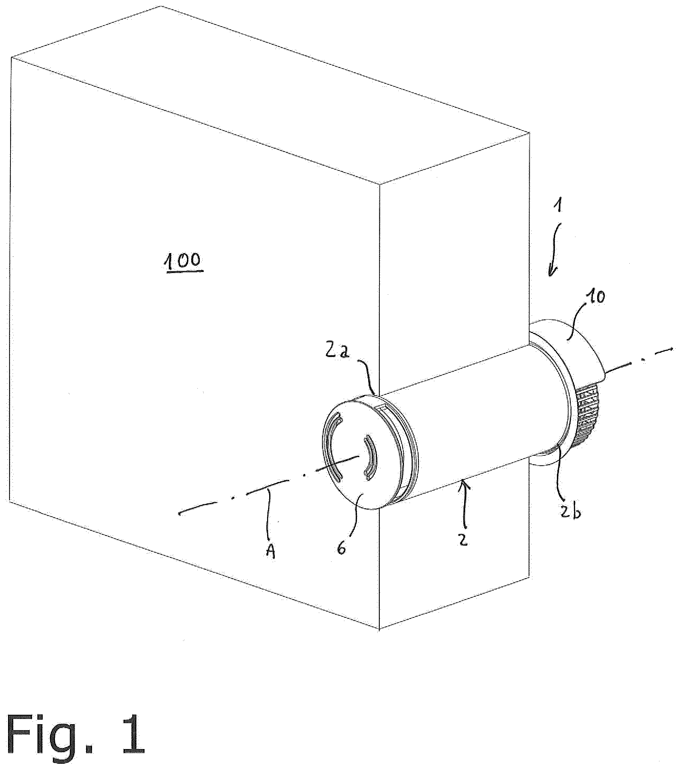

As shown for example in Figure 1, in operation the housing body 2 is fitted into a wall 100, and its ends 2a, 2b project therefrom.

It shall be noted that the ends 2a, 2b are closed each by a respective cover element 6 whose dimension transverse to the longitudinal axis of extension "A" is equal to or smaller than a corresponding transverse dimension of the housing body 2.

In addition, the second end 2b is closed by a grid 10, that lies over the cover element 6.

Advantageously, this allows the device 1 to be pulled out of the wall 100 without disassembling it. This pulling action is particularly carried out by a movement directed in a direction parallel to the longitudinal axis "A" and toward the second end 2b of the housing body 2.

The housing body 2 is preferably formed with a heat insulating material, preferably plastic and more preferably PVC or polyurethane.

More in detail, the housing body 2 has at least one air passage duct 3, 4. This duct 3, 4 has a first opening 3a, 4a and a second opening 3b, 4b. The first opening 3a, 4a, and the second opening 3b, 4b are configured to provide fluid communication between the duct 3,4 and two distinct environments, e.g. an indoor environment and an outdoor environment separated by the wall 100.

The duct 3, 4 further has a central zone 3c, 4c between the first 3a, 4a and second 3b, 4b openings.

The central zone 3c is far away from the first 3a, 4a and the second 3b, 4b openings and is up to 30 % of the volume defined by the housing body 2.

More in detail, in the preferred embodiment the device 1 comprises a first duct 3 and a second duct 4, which substantially have the same structure. These ducts 3, 4 are arranged in the housing body 2 such that the first opening 3a of the first duct 3 faces a first environment, whereas the second opening 3b of the first duct faces a second environment.

Concerning the second duct 4, the first opening 4a is in fluid communication with the second environment, whereas the second opening 4b is in fluid communication with the first environment.

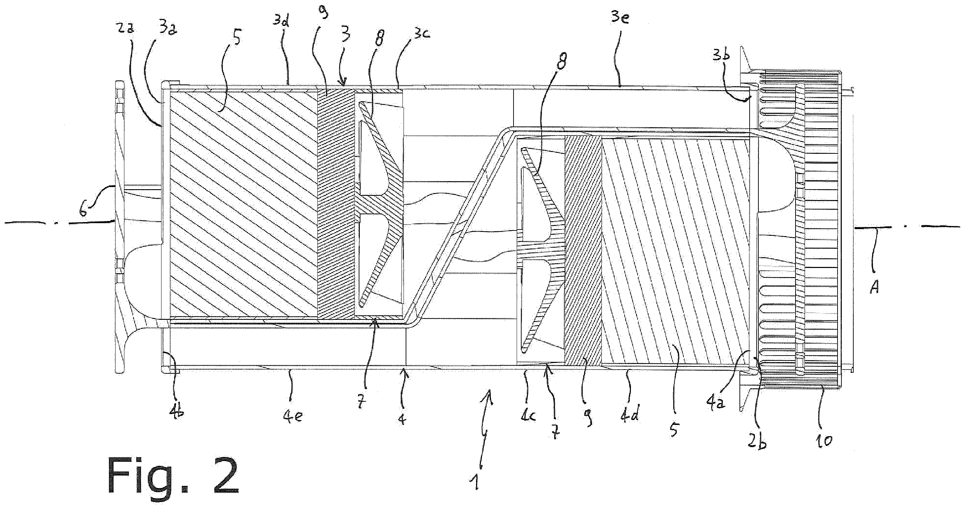

Particularly referring to Figure 2, the first end 2a of the housing body 2 is defined by the first opening 3a of the first duct 3 and, preferably, by the second opening 4b of the second duct 4. The second end 2b is defined by the second opening 3b of the first duct 3 and, preferably, by the first opening 4a of the second duct 4.

The structure of the preferred embodiment of the invention, i.e. with the device 1 having two distinct ducts 3, 4, will be described in greater detail hereinbelow.

Alternative embodiments may be provided, in which the device 1 comprises a single duct 3, 4.

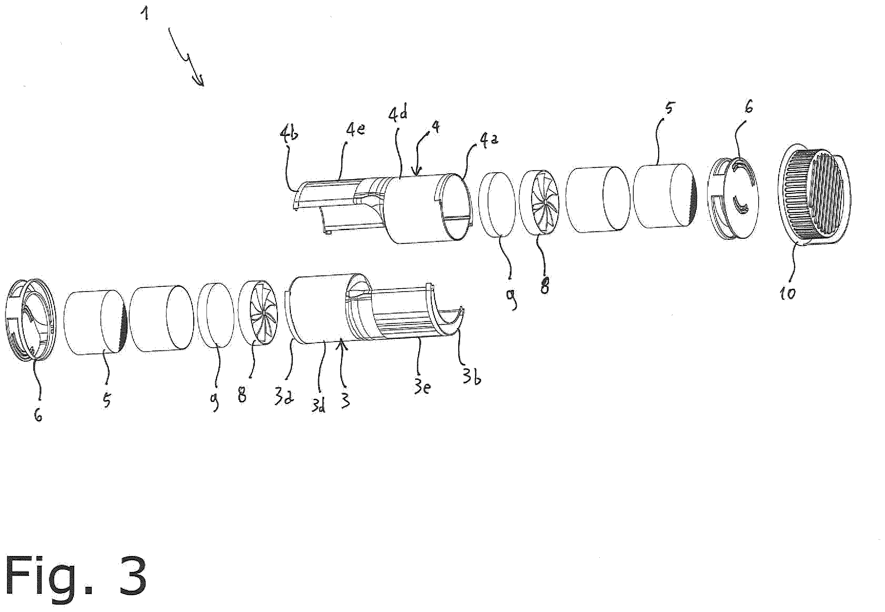

Particularly referring to Figures 2 and 3, it shall be noted that the first openings 3a, 4a of the ducts 3, 4 have a larger passage area than the second openings 3b, 4b.

It shall be also noted that each duct 3, 4 has a first portion 3d, 4d adjacent to its respective first opening 3a, 4a and a second portion 3e, 4e adjacent to its respective second opening 3b, 4b. Both the first portions 3d, 4d and the second portions 3e, 4e each have a respective cross section transverse to the longitudinal axis "A".

According to the preferred embodiment of the invention, the cross sections of the first portions 3d, 4d have a larger area than the cross sections of the second portions 3e, 4e.

In other words, both ducts 3, 4 are larger at their respective first portions 3d, 4d than at their respective second portions 3e, 4e.

More in detail, it shall be noted that each of the second portions 3e, 4e of the ducts 3, 4 contact the first portions 3d, 4d of the other duct 3, 4. In addition, each first portion 3d, 4d partially surrounds the first portion 3a, 4a of the other duct 3, 4.

The device 1 also comprises at least one heat accumulator 5. This accumulator 5 is configured to release and/or receive heat to/from air. Particularly, if a single duct is provided, the accumulator 5 is located within the duct 3, 4, particularly proximate to one of the openings 3a, 3b, 4a, 4b.

In the preferred embodiment of the invention, the device 1 comprises two accumulators 5, each located in a respective duct, particularly in the first portion 3d, 4d. More in detail, each accumulator 5 extends in a transverse direction to occupy substantially the entire first portion 3d, 4d of the respective ducts 3, 4.

The accumulator 5 extends along the longitudinal axis "A" from the first opening 3a, 4a to occupy most, but not all, of the first portion 3d, 4d.

The accumulator 5 is designed to have air flowing therethrough, thereby affording direct heat exchange by convection, a more particularly by forced convection.

Preferably, the accumulator 5 is made of a ceramic material or, alternatively, any other material having a high heat capacity.

In order to obtain air circulation in the ducts 3, 4, the device 1 comprises air moving means 7, which are configured to push air from the first opening 3a, 4a to the second opening 3b, 4b and vice versa.

Namely, the air moving means 7 are placed in the central zone 3c, 4c of the ducts 3, 4, i.e. at a distance from the openings 3a, 3b, 4a, 4b. This arrangement is highly advantageous, since it increases the distance of noise sources, i.e. the air moving means 7, from the openings 3a, 3b, 4a, 4b, particularly the opening 3a, i.e. the one that provides fluid communication between the device 1 and the room.

Particularly referring to Figure 2, the air moving means 7 comprise a pair of fans 8. Each of them is located in a respective duct 3, 4.

In particular, each fan 8 is placed between its respective accumulator 5 and the second portion 3e, 4e.

In other words, the fans 8 are introduced into the innermost zone of the first portions 3d, 4d, that define the aforementioned central zones 3c, 4c.

It shall be noted that the fans 8 are designed to rotate in a first or a second direction of rotation. In the first direction the fans 8 draw air from the first environment through the ducts 3, 4 and introduce it into the second environment. In the second direction, the fans 8 draw air from the second environment and introduce it into the first environment.

The fans 8 are well known and will not be further described herein.

The device 1 comprises a control unit (not shown), which is designed to control the actuation and the direction of rotation of the fans 8.

Preferably the control unit may be programmed by the user with the possibility to adjust the operating ranges of the fans 8.

Optionally, the control unit can force simultaneous one-way operation of both fans 8. In other words, the fans 8 may also operate in the same direction both for suction and delivery from/to the first environment and/or the second environment. Advantageously, this will allow the device to only have a ventilation purpose, without or minimally changing the temperature of the air introduced into or drawn from the environment.

Optionally, the device 1 further comprises one or more sensors (not shown) which are designed to measure one or more air parameters proximate to the first 2a or the second 2b ends of the housing body 2. These parameters may be, for example, air temperature, humidity, concentration of volatile organic compounds (VOC), concentration of carbon dioxide or others.

Optionally, the device 1 comprises a pair of filter elements 9, each placed in a respective duct 3, 4. Particularly, each filter element 9 is placed in the respective first portion 3d, 4d between the accumulator 5 and the fan 8.

In order to ventilate the environments separated by the wall 100, the device 1 operates the fans 8 in the first direction. If the first environment has a higher temperature than the second environment, the air that flows through the ducts 3, 4 transfers heat to the accumulators 5 either directly, i.e. by direct contact, or indirectly, by thermal communication between the ducts 3, 4. After a predetermined period of time, the fans 8 are rotated in the second direction. The air that flows through the ducts 3, 4 will absorb heat from the accumulators 5 and when it is introduced into the first environment, it will have a higher temperature than that of the second environment from which it was drawn.

Those skilled in the art will obviously appreciate that a number of changes and variants as described above may be made to fulfill particular requirements, without departure from the scope of the invention, as defined in the following claims.

## Claims

1. A heat exchanger and accumulator device (1) for ventilating rooms, comprising:
- a housing body (2) having a longitudinal development axis (A), which can be fitted into a wall (100) and at least one air passage duct (3, 4), said duct (3, 4) having a first opening (3a, 4a) and a second opening (3b, 4b), said first opening (3a, 4a) being configured for providing fluid communication between said duct (3, 4) and a first environment, said second opening (3b, 4b) being configured for providing fluid communication between said duct (3, 4) and a second environment, said duct (3, 4) also having a central zone (3c, 4c) located between said first opening (3a, 4a) and said second opening (3b, 4b);
- at least one heat accumulator (5) configured for releasing and/or receiving heat from air, located inside said duct (3, 4); said at least one accumulator (5) being in a proximal position to one of said openings (3a, 4a, 3b, 4b),
- air moving means (7) being placed in a central zone (3c, 4c) of said duct (3, 4),
- said air moving means (7) configured to push air from the first opening (3a, 4a) to the second opening (3b, 4b) and from the second opening (3b, 4b) to the first opening (3a, 4a);
**characterized in that** it comprises a first duct (3) and a second duct (4), each having a first opening (3a, 4a) and a second opening (3b, 4b), the first opening (3a) of the first duct (3) being configured to provide fluid communication between the first duct (3) and a first environment, said second opening (3b) of said first duct (3) being configured to provide fluid communication between said first duct (3) and said second environment, said first opening (4a) of the second duct (4) being configured to provide fluid communication between the second duct (4) and a second environment, said second opening (4b) of said second duct (4) being configured to provide fluid communication between said second duct (4) and said first environment.

2. A device (1) as claimed in claim 1, wherein said first openings (3a, 4a) of said ducts (3, 4) have a larger area than said second openings (3b, 4b).

3. A device (1) as claimed in claim 1 or 2, wherein each of said ducts (3, 4) has a first portion (3d, 4d) adjacent to its respective first opening (3a, 4a) and a second portion (3e, 4e) adjacent to its respective second opening (3b, 4b), each of said first portions (3d, 4d) and said second portions (3e, 4e) having a respective cross section transverse to said longitudinal development axis (A), said cross sections of said first portions (3d, 4d) having a larger area than the cross sections of said second portions (3e, 4e).

4. A device (1) as claimed in any of claims 1 to 3, **characterized in that** it comprises two accumulators (5), each located in a respective duct (3, 4).

5. A device (1) as claimed in any of claims 1 to 4, wherein said air moving means (7) comprise a pair of fans (8), each located in a respective duct (3, 4).

6. A device (1) as claimed in claim 5, wherein each fan (8) is disposed in its respective duct, between its respective accumulator (5) and the second portion (3e, 4e).

7. A device (1) as claimed in any of the preceding claims, wherein said housing body (2) has a first end (2a) and a second end (2b), said first end (2a) being defined by the first opening (3a) of said first duct (3) and preferably by the second opening (4b) of said second duct (4), said second end (2b) being defined by the second opening (3b) of said first duct (3) and preferably by the first opening (4a) of said second duct (4), each of said ends (2a, 2b) having a cover element (6) whose transverse dimension is equal to or smaller than a corresponding transversal dimension of said housing body (2).

8. A device (1) as claimed in any of the preceding claims, wherein said housing body (2) is made from a heat insulating material, preferably plastic and even more preferably PVC or polyurethane.

9. A device (1) as claimed in claim 8, wherein said housing body (2) has a substantially cylindrical shape whose diameter ranges from 120 to 200 mm, and is preferably 160 mm, and whose length ranges from 400 to 480 mm, and is preferably 440 mm.

## Patentansprüche

1. Wärmetauscher und Akkumulatorvorrichtung (1) zur Belüftung von Räumen, umfassend:
- einen eine Längsentwicklungsachse (A) aufweisenden Gehäusekörper (2), der in eine Wand (100) eingelassen werden kann und zumindest eine Luftdurchgangsleitung (3, 4), wobei die Leitung (3, 4) eine erste Öffnung (3a, 4a) und eine zweite Öffnung (3b, 4b) aufweist; die erste Öffnung (3a, 4a) dazu ausgebildet ist, eine Fluidverbindung zwischen der Leitung (3, 4) und einer ersten Umgebung herzustellen, die zweite Öffnung (3b, 4b) dazu ausgebildet ist, eine Fluidverbindung zwischen der Leitung (3, 4) und einer zweiten Umgebung herzustellen; die Leitung (3, 4) zudem einen zwischen der ersten Öffnung (3a, 4a) und der zweiten Öffnung (3b, 4b) befindlichen mittleren Bereich (3c, 4c) aufweist;
- zumindest einen Wärmeakkumulator (5), der dazu ausgebildet ist, Wärme an die Luft abzugeben und/oder aus der Luft aufzunehmen, der sich innerhalb der Leitung (3, 4) befindet; wobei der mindestens eine Akkumulator (5) sich in einer proximalen Position zu einer der Öffnungen (3a, 4a, 3b, 4b) befindet,
- Luftbewegungsmittel (7), die in einem mittleren Bereich (3c, 4c) der Leitung (3, 4) angeordnet sind,
- die Luftbewegungsmittel (7) dazu ausgebildet sind, Luft aus der ersten Öffnung (3a, 4a) in die zweite Öffnung (3b, 4b) und aus der zweiten Öffnung (3b, 4b) in die erste Öffnung (3a, 4a) zu treiben;
**dadurch gekennzeichnet, dass** er eine erste Leitung (3) und eine zweite Leitung (4) umfasst, die jeweils eine erste Öffnung (3a, 4a) und eine zweite Öffnung (3b, 4b) aufweisen, wobei die erste Öffnung (3a) der ersten Leitung (3) dazu ausgebildet ist, eine Fluidverbindung zwischen der ersten Leitung (3) und einer ersten Umgebung herzustellen; die zweite Öffnung (3b) der ersten Leitung (3) dazu ausgebildet ist, eine Fluidverbindung zwischen der ersten Leitung (3) und der zweiten Umgebung herzustellen; die erste Öffnung (4a) der zweiten Leitung (4) dazu ausgebildet ist, eine Fluidverbindung zwischen der zweiten Leitung (4) und einer zweiten Umgebung herzustellen; die zweite Öffnung (4b) der zweiten Leitung (4) dazu ausgebildet ist, eine Fluidverbindung zwischen der zweiten Leitung (4) und der ersten Umgebung herzustellen.

2. Vorrichtung (1) wie in Anspruch 1 beansprucht, wobei die ersten Öffnungen (3a, 4a) der Leitungen (3, 4) eine größere Fläche als die zweiten Öffnungen (3b, 4b) aufweisen.

3. Vorrichtung (1) wie in Anspruch 1 oder 2 beansprucht, wobei jede der Leitungen (3, 4) einen zur ihren jeweiligen ersten Öffnung (3a, 4a) benachbarten ersten Abschnitt (3d, 4d) und einen zur ihren jeweiligen zweiten Öffnung (3b, 4b) benachbarten zweiten Abschnitt (3e, 4e) aufweist; wobei jeder der ersten Abschnitte (3d, 4d) und der zweiten Abschnitte (3e, 4e) einen entsprechenden Querschnitt quer zur Längsentwicklungsachse (A) aufweist, die Querschnitte der ersten Abschnitte (3d, 4d) eine größere Fläche als die Querschnitte der zweiten Abschnitte (3e, 4e) aufweisen.

4. Vorrichtung (1) wie in irgendeinem der Ansprüche von 1 bis 3 beansprucht, **dadurch gekennzeichnet, dass** sie zwei Akkumulatoren (5) umfasst, wobei jeder in eine entsprechende Leitung (3, 4) angeordnet ist.

5. Vorrichtung (1) wie in irgendeinem der Ansprüche von 1 bis 4 beansprucht, wobei die Luftbewegungsmittel (7) ein Paar Gebläse (8) umfassen, wobei jedes in eine entsprechende Leitung (3, 4) angeordnet ist.

6. Vorrichtung (1) wie in Anspruch 5 beansprucht, wobei jedes Gebläse (8) in seiner jeweiligen Leitung zwischen dem jeweiligen Akkumulator (5) und dem zweiten Abschnitt (3e, 4e) angeordnet ist.

7. Vorrichtung (1) wie in irgendeinem der vorhergehenden Ansprüche beansprucht, wobei der Gehäusekörper (2) ein erstes Ende (2a) und eine zweites Ende (2b) aufweist, das erste Ende (2a) durch die erste Öffnung (3a) der ersten Leitung (3) und bevorzugt durch die zweite Öffnung (4b) der zweiten Leitung (4) definiert ist, das zweite Ende (2b) durch die zweite Öffnung (3b) der ersten Leitung (3) und bevorzugt durch die erste Öffnung (4a) der zweiten Leitung (4) definiert ist; jedes der genannten Enden (2a, 2b) ein Abdeckelement (6) aufweist, dessen Querabmessung gleich oder kleiner als eine entsprechende Querabmessung des Gehäusekörpers (2) ist.

8. Vorrichtung (1) wie in irgendeinem der vorhergehenden Ansprüche beansprucht, wobei der Gehäusekörper (2) aus einem wärmeisolierenden Material, bevorzugt Kunststoff und besonders bevorzugt PVC oder Polyurethan hergestellt ist.

9. Vorrichtung (1) wie in Anspruch 8 beansprucht, wobei der Gehäusekörper (2) eine im Wesentlichen zylinderförmige Gestalt aufweist, dessen Durchmesser in einem Bereich zwischen 120 und 200 mm liegt und bevorzugt 160 mm beträgt und dessen Länge in einem Bereich zwischen 400 und 480 mm liegt und bevorzugt 440 mm beträgt.

## Revendications

1. Échangeur de chaleur et dispositif accumulateur (1) pour aérer des pièces, comprenant :
- un corps de logement (2) ayant un axe de développement longitudinal (A), qui peut être inséré dans une paroi (100) et au moins un conduit de passage d'air (3, 4), ledit conduit (3, 4) ayant une première ouverture (3a, 4a) et une deuxième ouverture (3b, 4b), ladite première ouverture (3a, 4a) étant configurée pour fournir une communication fluidique entre ledit conduit (3, 4) et un premier environnement, ladite deuxième ouverture (3b, 4b) étant configurée pour fournir une communication fluidique entre ledit conduit (3, 4) et un deuxième environnement, ledit conduit (3, 4) ayant aussi une zone centrale (3c, 4c) agencée entre ladite première ouverture (3a, 4a) et ladite deuxième ouverture (3b, 4b) ;
- au moins un accumulateur de chaleur (5) configuré pour relâcher et/ou recevoir de la chaleur de l'air, se trouvant à l'intérieur dudit conduit (3, 4) ; ledit au moins un accumulateur (5) étant dans une position proximale par rapport à une desdites ouvertures (3a, 4a, 3b, 4b),
- des moyens de mouvement de l'air (7) étant placés dans une zone centrale (3c, 4c) dudit conduit (3, 4),
- lesdits moyens de mouvement de l'air (7) configurés pour pousser de l'air de la première ouverture (3a, 4a) à la deuxième ouverture (3b, 4b) et de la deuxième ouverture (3b, 4b) à la première ouverture (3a, 4a) ;
**caractérisé en ce qu'il** comprend un premier conduit (3) et un deuxième conduit (4), ayant chacun une première ouverture (3a, 4a) et une deuxième ouverture (3b, 4b), la première ouverture (3a) du premier conduit (3) étant configurée pour fournir une communication fluidique entre le premier conduit (3) et un premier environnement, ladite deuxième ouverture (3b) dudit premier conduit (3) étant configurée pour fournir une communication fluidique entre ledit premier conduit (3) et ledit deuxième environnement, ladite première ouverture (4a) du deuxième conduit (4) étant configurée pour fournir une communication fluidique entre le deuxième conduit (4) et un deuxième environnement, ladite deuxième ouverture (4b) dudit deuxième conduit (4) étant configurée pour fournir une communication fluidique entre ledit deuxième conduit (4) et ledit premier environnement.

2. Dispositif (1) selon la revendication 1, dans lequel lesdites premières ouvertures (3a, 4a) desdits conduits (3, 4) ont une zone plus grande que lesdites deuxièmes ouvertures (3b, 4b).

3. Dispositif (1) selon la revendication 1 ou 2, dans lequel chacun desdits conduits (3, 4) a une première partie (3d, 4d) adjacente à sa première ouverture (3a, 4a) respective et une deuxième partie (3e, 4e) adjacente à sa deuxième ouverture (3b, 4b) respective, chacune desdites premières parties (3d, 4d) et desdites deuxièmes parties (3e, 4e) ayant une section transversale respective transversale audit axe de développement longitudinal (A), lesdites sections transversales desdites premières parties (3d, 4d) ayant une zone plus grande que les sections transversales desdites deuxièmes parties (3e, 4e).

4. Dispositif (1) selon l'une quelconque des revendications 1 à 3, **caractérisé en ce qu'**il comprend deux accumulateurs (5), chacun positionné dans un conduit (3, 4) respectif.

5. Dispositif (1) selon l'une quelconque des revendications 1 à 4, dans lequel lesdits moyens de mouvement de l'air (7) comprennent une paire de ventilateurs (8), chacun positionné dans un conduit (3, 4) respectif.

6. Dispositif (1) selon la revendication 5, dans lequel chaque ventilateur (8) est disposé dans son conduit respectif, entre son accumulateur (5) respectif et la deuxième partie (3e, 4e).

7. Dispositif (1) selon l'une quelconque des revendications précédentes, dans lequel ledit corps de logement (2) a une première extrémité (2a) et une deuxième extrémité (2b), ladite première extrémité (2a) étant définie par la première ouverture (3a) dudit premier conduit (3) et préférablement par la deuxième ouverture (4b) dudit deuxième conduit (4), ladite deuxième extrémité (2b) étant définie par la deuxième ouverture (3b) dudit premier conduit (3) et préférablement par la première ouverture (4a) dudit deuxième conduit (4), chacune desdites extrémités (2a, 2b) ayant un élément de couvercle (6) dont la dimension transversale est égale à ou plus petite qu'une dimension transversale correspondante dudit corps de logement (2).

8. Dispositif (1) selon l'une quelconque des revendications précédentes, dans lequel ledit corps de logement (2) est constitué d'un matériau calorifuge, préférablement plastique et encore plus préférablement PVC ou polyuréthane.

9. Dispositif (1) selon la revendication 8, dans lequel ledit corps de logement (2) a une forme sensiblement cylindrique dont le diamètre est compris entre 120 et 200 mm, et est préférablement 160 mm, et dont la longueur est comprise entre 400 et 480 mm, et est préférablement 440 mm.
